# EUROPEAN PATENT SPECIFICATION

(11) **EP 4 270 902 B1**
(45) Date of publication and mention of the grant of the patent: **23.04.2025**
(21) Application number: 21913246.1
(22) Date of filing: 18.09.2021
(51) Int. Cl.: H04L 67/00, G06F 13/40, H03H 17/06

(54) **DATA CONVERSION METHOD AND APPARATUS, AND STORAGE MEDIUM AND ELECTRONIC APPARATUS**
DATENUMWANDLUNGSVERFAHREN UND -VORRICHTUNG SOWIE SPEICHERMEDIUM UND ELEKTRONISCHE VORRICHTUNG
PROCÉDÉ ET APPAREIL DE CONVERSION DE DONNÉES, ET SUPPORT DE STOCKAGE ET APPAREIL ÉLECTRONIQUE

(30) Priority: 31.12.2020 CN 202011639456
(43) Date of publication of application: 01.11.2023
(73) Proprietor: Sanechips Technology Co., Ltd., Shenzhen, Guangdong 518055 (CN)
(72) Inventor: ZHOU, Peng, Shenzhen, Guangdong 518057 (CN); HUANG, Zhen, Shenzhen, Guangdong 518057 (CN); GONG, Xiaoliang, Shenzhen, Guangdong 518057 (CN); YANG, Jian, Shenzhen, Guangdong 518057 (CN); CUI, Pengfei, Shenzhen, Guangdong 518057 (CN); BI, Chao, Shenzhen, Guangdong 518057 (CN)
(74) Representative: Canzler & Bergmeier Patentanwälte Partnerschaft mbB
(86) International application number: PCT/CN2021/119361
(87) International publication number: WO 2022/142501

(56) References cited:
- WO-A1-2014/194752
- CN-A- 101 166 151
- CN-A- 106 294 234
- CN-A- 106 933 774
- CN-A- 110 221 994
- CN-A- 110 221 994
- US-A1- 2003 002 474
- US-A1- 2003 002 474
- US-A1- 2009 284 401

## Description

### TECHNICAL FIELD

Implementations of the present disclosure relate to the field of communications, and in particular, to a data conversion method and apparatus, a storage medium, and an electronic apparatus.

### BACKGROUND

In the existing technology, sample data and link-layer transmission data of JESD204C need to be respectively acquired according to specific requirements of the protocol. The above method needs to separately acquire the sample data and the link-layer transmission data. The present disclosure proposes a conversion method for the sample data and the link-layer transmission data, so as to realize conversion between the sample data and the link-layer transmission data. Chinse patent application publication No. CN 110 221 994 A provides a data bit width conversion method and device, and a computer-readable storage medium. The method comprises: generating, according to parallel data conversion information, control information of data bit width conversion; and performing, based on the control information, parallel data bit width conversion, a cross-clock-domain operation and cross-clock anti-jitter processing. According to the embodiments of the invention, the matching of a parallel data bit width between a PCS/FEC and Serdes of various interface protocols can be realized. International patent application publication No. WO 2014/194752 A1 provides a method, apparatus and electronic device for data mapping. The method includes: receiving sample data; according to the format conversion relationship between the sample data and the data of a JESD204B interface, mapping each data bit in the sample data to the corresponding data bit in the link layer transmission data of the JESD204B interface. Embodiments of the invention support the data conversion between the sample data and the link layer transmission data. Chinse patent application publication No. CN 106 933 774 A provides a frame decoding method in a JESD204B protocol. The method comprises the following steps that: according to a pre-input parameter, determining data bit width output after frame decoding is carried out; according to pre-determined octets in each frame, judging a form for extracting data from each channel, i.e., extracting the data according to a byte form or a character form; on the basis of a judgment result, carrying out extraction and sorting processing on the character data or the byte data of each channel to obtain the character data subjected to the sorting processing; reducing the character data subjected to the sorting processing into the sample data of each converter; and according to the data bit width, combining the sample data of each converter, and outputting the combined data. By use of the frame decoding method in theJESD204B protocol, a frame decoding process can be realized according to the requirements of the JESD204B protocol.

### SUMMARY

The present disclosure provides a data conversion method and apparatus, a storage medium, and an electronic apparatus, so as to at least solving the problem of low acquisition efficiency of sample data and link-layer transmission data in the existing technology. The features of the data conversion method and apparatus, the storage medium, and the electronic apparatus according to the present invention are defined in the independent claims, and the preferable features according to the present invention are defined in the dependent claims.

An implementation of the present disclosure provides a data conversion method, including: acquiring sample data obtained by sampling in a network communication process; reordering the sample data; and performing a cross-clock operation and a bit-width conversion operation on the reordered sample data to obtain link-layer transmission data after conversion.

Another implementation of the present disclosure provides a data conversion method, including: acquiring link-layer transmission data to be converted in a network communication process; performing a bit-width conversion operation and a cross-clock operation on the link-layer transmission data to obtain the processed link-layer transmission data; and determining data obtained after reordering the processed link-layer transmission data as sample data.

Still another implementation of the present disclosure provides a data conversion apparatus, including: an acquisition unit configured to acquire sample data obtained by sampling in a network communication process; a reordering unit configured to reorder the sample data; and a processing unit configured to perform a cross-clock operation and a bit-width conversion operation on the reordered sample data to obtain link-layer transmission data after conversion.

Yet another implementation of the present disclosure provides a data conversion apparatus, including: an acquisition unit configured to acquire link-layer transmission data to be converted in a network communication process; a processing unit configured to perform a bit-width conversion operation and a cross-clock operation on the link-layer transmission data to obtain the processed link-layer transmission data; and a reordering unit configured to determine data obtained after reordering the processed link-layer transmission data as sample data.

Yet another implementation of the present disclosure further provides a computer-readable storage medium having a computer program stored therein, wherein the computer program is configured to implement, when being run, operations according to any one of the method implementations described above.

Yet another implementation of the present disclosure further provides an electronic apparatus, including a memory having a computer program stored therein, and a processor configured to run the computer program to perform the operations according to any one of the method implementations described above.

According to the present disclosure, after the sample data or the link-layer transmission data is acquired, the data can be converted through the above methods, so that one of the sample data and the link-layer transmission data can be obtained by data conversion after the other one of the sample data and the link-layer transmission data is acquired. Thus, the need to separately acquire the sample data and the link-layer transmission data is obviated, and flexible conversion between the sample data and the link-layer transmission data is realized.

### BRIEF DESCRIPTION OF DRAWINGS

FIG. 1 is a block diagram of a hardware structure of a mobile terminal where a data conversion method is performed according to an implementation of the present disclosure;
FIG. 2 is a flowchart illustrating a data conversion method according to an implementation of the present disclosure;
FIG. 3 is a flowchart illustrating another data conversion method according to an implementation of the present disclosure;
FIG. 4 is a schematic diagram illustrating data reordering in the data conversion method according to the implementation of the present disclosure;
FIG. 5 is a schematic diagram illustrating data frequency division in the data conversion method according to the implementation of the present disclosure;
FIG. 6 is a schematic diagram illustrating data bit-width conversion in the data conversion method according to the implementation of the present disclosure;
FIG. 7 is another schematic diagram illustrating the data bit-width conversion in the data conversion method according to the implementation of the present disclosure;
FIG. 8 is a schematic diagram illustrating data frequency multiplication in the data conversion method according to the implementation of the present disclosure;
FIG. 9 is another schematic diagram illustrating the data reordering in the data conversion method according to the implementation of the present disclosure;
FIG. 10 is a block diagram of a data conversion apparatus according to an implementation of the present disclosure; and
FIG. 11 is a block diagram of another data conversion apparatus according to an implementation of the present disclosure.

### DETAIL DESCRIPTION OF EMBODIMENTS

The implementations of present disclosure will be described in detail below with reference to the drawings and in conjunction with the implementations.

It should be noted that the terms "first", "second" and the like in description, claims, and drawings of the present disclosure are used for distinguishing between similar objects, but not necessarily for describing a particular order or a chronological order.

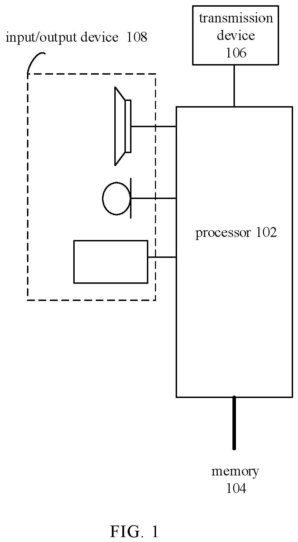

The method provided in the implementations of the present disclosure may be performed in a mobile terminal, a computer terminal, or a similar computing device. A case where the method is performed in the mobile terminal is taken as an example. FIG. 1 is a block diagram of a hardware structure of the mobile terminal where a data conversion method is performed according to an implementation of the present disclosure. As shown in FIG. 1, the mobile terminal may include one or more processors 102 (merely one processor is shown in FIG. 1) (the processor 102 may include, but is not limited to, a processing device such as a microprocessor (e.g., a microcontroller unit (MCU)) or a programmable logic device (e.g., a field programmable gate array (FPGA))), and a memory 104 for storing data. The mobile terminal may further include a transmission device for a communication function and an input/output device 108. It should be understood by those of ordinary skill in the art that the structure shown in FIG. 1 is merely for illustration and is not intended to limit the structure of the above mobile terminal. For example, the mobile terminal may include more or fewer components than those shown in FIG. 1, or may be configured in a way different from that shown in FIG. 1.

The memory 104 may be configured to store computer programs such as software programs and modules of application software, for example, the memory 104 is configured to store computer programs corresponding to the data conversion method provided by the implementation of the present disclosure. By executing the computer programs stored in the memory 104, the processor 102 performs various functional applications and data processing, that is, implementing the above data conversion method. The memory 104 may include a high-speed random access memory, and may also include a non-volatile memory, such as one or more magnetic storage devices, flash memories, or other non-volatile solid-state memories. **In** some examples, the memory 104 may further include a memory remotely arranged relative to the processor 102, and the remote memory may be connected to the mobile terminal via a network. Examples of the above network include, but are not limited to, the Internet, an intranet, a local area network, a mobile communication network, and the combinations thereof.

The transmission device 106 is configured to receive or transmit data via a network. The specific examples of the network may include a wireless network provided by a communication provider of the mobile terminal. **In** an example, the transmission device 106 includes a Network Interface Controller (NIC) that may be connected to other network devices via a base station so as to communicate with the Internet. In another example, the transmission device 106 may be a Radio Frequency (RF) module that is configured to communicate with the Internet in a wireless manner.

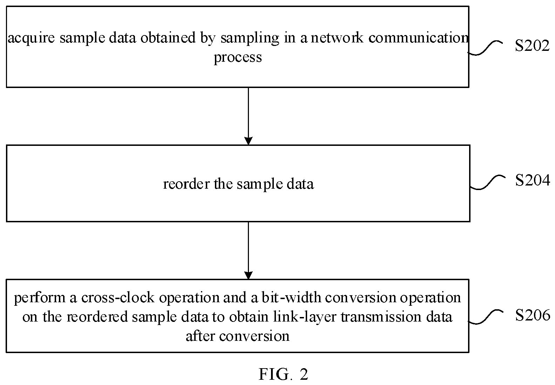

A data conversion method is provided in an implementation, and FIG. 2 is a flowchart illustrating the data conversion method according to the implementation of the present disclosure. As shown in FIG. 2, the method includes the following operations: operation S202, acquiring sample data obtained by sampling in a network communication process; operation S204, reordering the sample data; and operation S206, performing a cross-clock operation and a bit-width conversion operation on the reordered sample data to obtain link-layer transmission data after conversion.

After the sample data or the link-layer transmission data is acquired, the data can be converted through the above operations of the method, so that one of the sample data and the link-layer transmission data can be obtained by data conversion after the other one of the sample data and the link-layer transmission data is acquired.

An execution body of the above operations may be a base station, a terminal, etc., but the present disclosure is not limited thereto.

As an alternative example, reordering the sample data includes: selecting output data from multiple channels of sample data, writing the output data to a first memory module, and reading the output data from the first memory module according to an order to obtain the reordered sample data.

As an alternative example, selecting the output data from the multiple channels of sample data, writing the output data to the first memory module, and reading the output data from the first memory module according to the order to obtain the reordered sample data includes: selecting, by a multi-channel data selection module, the output data from the multiple channels of sample data according to selection configuration information in a first configuration information module, and writing, by the multi-channel data selection module, the selected output data to the first memory module according to write address information in the first configuration information module, with the data which needs to appear first on a lane written to a low address of the first memory module, and the data which needs to appear afterwards on the lane written to a high address of the first memory module; and acquiring the reordered sample data in ascending order of read addresses of the first memory module.

The operation of performing the cross-clock operation on the reordered sample data includes: writing the sample data to a second memory module according to a first clock; and reading the sample data from the second memory module according to a second clock, with the first clock being different from the second clock.

The operation of performing the bit-width conversion operation on the reordered sample data includes: acquiring a read enable parameter rd_en and a shift amount shift_num of a shift register, and storing the sample data of the second memory module in the shift register and performing a corresponding shift operation, according to rd_en and shift_num.

The operation of acquiring the read enable parameter rd_en and the shift amount shift_num of the shift register, and storing the sample data of the second memory module in the shift register and performing the corresponding shift operation, according to rd_en and shift_num includes: performing the following operations by a bit-width conversion module: acquiring the read enable parameter rd_en and the shift amount shift_num of the shift register which are stored in a second configuration information module, and setting a parameter cnt which represents the data left in the shift register in a next beat of the shift register; in a case where cnt is greater than or equal to w, determining that the read enable parameter rd_en is invalid and ent=ent-w, wherein the sample data of the second memory module is prohibited from being stored in the shift register in a case where rd_en is invalid, and the sample data of the second memory module is read and stored in the shift register in a case where rd_en is valid; in a case where cnt is less than w, determining that rd_en is valid and cnt = cnt - w + n * N'* x , where n denotes the number of channels of the reordered sample data, N' denotes a transmission bit width of the reordered sample data, w denotes a bit width of data transmitted on each lane, and x denotes a frequency division multiplying factor for performing frequency division and combination on the reordered sample data; and in a case where rd_en is invalid, directly sending the data in low w bits of the shift register and simultaneously determining that the shift amount shift_num of the shift register satisfies shift_num =w , and in a case where rd_en is valid, directly sending the data in the low w bits of the shift register and simultaneously determining that the shift amount shift_num of the shift register satisfies shift_num = w - cnt

As an alternative example, before performing the cross-clock operation and the bit-width conversion operation on the reordered sample data, the method further includes: performing data frequency division and combination on the reordered sample data.

Performing the cross-clock operation on the reordered sample data includes: performing the cross-clock operation on the sample data subjected to the data frequency division and combination.

As an alternative example, performing the data frequency division and combination on the reordered sample data includes: in the reordered sample data, in a case where n * N' is less than w, performing x-fold (or x-time) frequency division on the data having a bit width of n * N', and splicing the data involved in x beats of the shift register before and after the current operation (e.g., the current beat, e.g., the x beats including the current beat) of the shift register together to obtain data having a bit width of n*N'*x, where n denotes the number of the channels of the reordered sample data, N' denotes the transmission bit width of the reordered sample data, w denotes the bit width of the data transmitted on each lane, x denotes the frequency division multiplying factor, n*N'*x is greater than w, and n*N'*(x-1) is less than w; and in the reordered sample data, in a case where n * N' is greater than w, directly transmitting the reordered sample data in a pass-through manner.

As an alternative example, the sample data and the link-layer transmission data are sample data and link-layer transmission data under JESD204C.

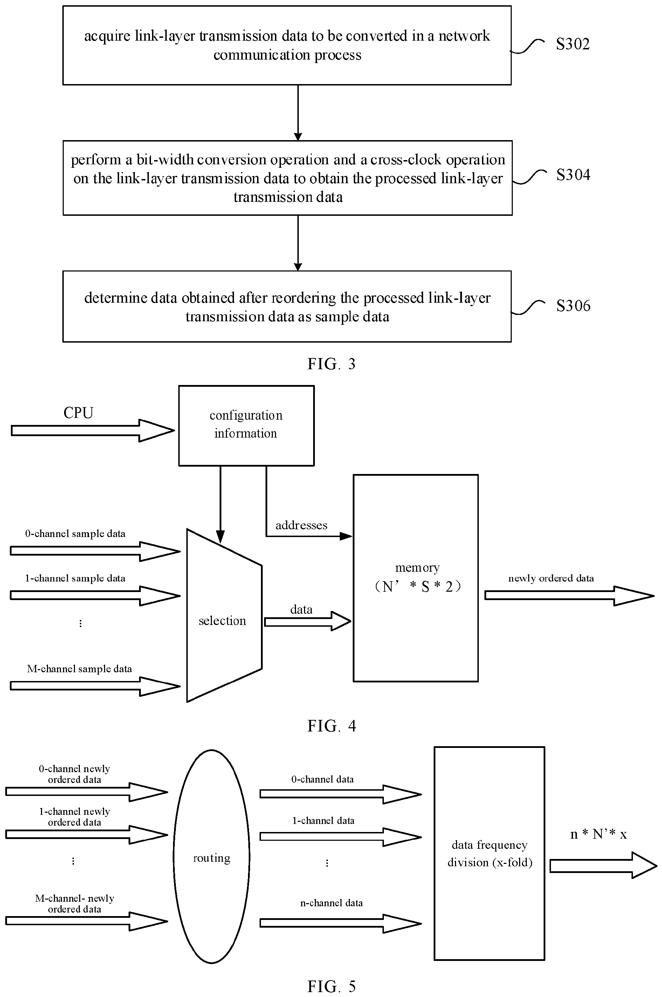

In another aspect of the present disclosure, an implementation provides a data conversion method. As shown in FIG. 3, the method includes: operation S302, acquiring link-layer transmission data to be converted in a network communication process; operation S304, performing a bit-width conversion operation and a cross-clock operation on the link-layer transmission data to obtain the processed link-layer transmission data; and operation S306, determining data obtained after reordering the processed link-layer transmission data as sample data.

The operation of performing the bit-width conversion operation on the link-layer transmission data includes: acquiring a write enable parameter wr_en and a shift amount shift_num of a shift register, using shift_num to control the shift register to operate, and writing output data of the shift register to a third memory module.

The operation of acquiring the write enable parameter wr_en and the shift amount shift_num of the shift register, using shift_num to control the shift register to operate, and writing the output data of the shift register to the third memory module includes: perform the following operations by a bit-width conversion module: acquiring the write enable parameter wr_en and the shift amount shift_num of the shift register from a third configuration information module, and setting a parameter cnt which represents the data left in the shift register in a next beat of the shift register; in a case where cnt is greater than or equal to n*N'* x - w, determining that the write enable parameter wr_en is valid and cnt = cnt +w -n * N'* x , wherein the link-layer transmission data in the shift register is read and written to the third memory module in a case where wr_en is valid, and the link-layer transmission data in the shift register is prohibited from being read or written to the third memory module in a case where wr_en is invalid; in a case where cnt is less than n * N'* x -w, determining that wr_en is invalid and cnt = cnt + w, where n denotes the maximum number of channels of the sample data transmitted on a lane, N' denotes a transmission bit width of the sample data after reordering, w denotes a bit width of data transmitted on each lane, and x denotes a frequency division multiplying factor for performing frequency division and combination on the link-layer transmission data; and in a case where wr_en is invalid, prohibiting the data in low n * N'* x bits of the shift register from being sent and simultaneously determining that the shift amount shift_num of the shift register satisfies shift_num = w, and in a case where wr_en is valid, directly sending the data in the low n*N'* x bits of the shift register, writing the data in the low n * N'* x bits of the shift register to the third memory module, and simultaneously determining that the shift amount shift_num of the shift register satisfies shift_num = w-cnt.

As an alternative example, performing the cross-clock operation on the link-layer transmission data includes: writing the link-layer transmission data to the third memory module according to a second clock; and reading the link-layer transmission data from the third memory module according to a first clock, with the first clock being different from the second clock.

As an alternative example, after performing the bit-width conversion operation and the cross-clock operation on the link-layer transmission data, the method further includes: performing a frequency division and combination operation on the processed link-layer transmission data.

Determining the data obtained by reordering the processed link-layer transmission data as the sample data includes: determining the data obtained by reordering the link-layer transmission data subjected to the frequency division and combination operation as the sample data.

As an alternative example, performing the frequency division and combination operation on the processed link-layer transmission data includes: in the processed link-layer transmission data, in a case where n * N' is less than w, performing x-fold frequency multiplication on the data having a bit width of n*N'* x to obtain output data having a bit width of n*N', with the data having the bit width of n*N'* x before the frequency multiplication and splitting being discontinuous, and the data having the bit width of n * N' after the splitting being continuous; and in a case where n*N' is greater than or equal to w, directly transmitting the processed link-layer transmission data in a pass-through manner, where n denotes the maximum number of the channels of the sample data transmitted on the lane, N' denotes the transmission bit width of the sample data after reordering, and x denotes the frequency division multiplying factor for performing the frequency division and combination on the link-layer transmission data.

As an alternative example, determining the data obtained by reordering the processed link-layer transmission data as the sample data includes: selecting output data from the processed link-layer transmission data, writing the output data to a fourth memory module, and reading the output data from the fourth memory module according to an order to obtain the sample data after reordering.

As an alternative example, selecting the output data from the processed link-layer transmission data, writing the output data to the fourth memory module, and reading the output data from the fourth memory module according to the order to obtain the sample data after reordering includes: selecting, by a multi-channel data selection module, the output data from the processed link-layer transmission data according to selection configuration information in a fourth configuration information module, and writing, by the multi-channel data selection module, the selected output data to the fourth memory module according to write address information in the fourth configuration information module, with the data which needs to appear first written to a low address of the fourth memory module, and the data which needs to appear afterwards written to a high address of the fourth memory module; and determining the reordered data as the sample data in ascending order of read addresses of the fourth memory module.

As an alternative example, the sample data and the link-layer transmission data are sample data and link-layer transmission data under JESD204C.

The above methods will be described in conjunction with specific examples. The input data described below may be the sample data and the output data described below may be the link-layer transmission data. Alternatively, the input data described below is the link-layer transmission data and the output data is the sample data.

The data conversion methods provided by the implementations of the present disclosure are intended to achieve conversion from the sample data received by a JESD204C interface to the link-layer transmission data of the JESD204C interface and conversion from the link-layer transmission data of the JESD204C interface to the sample data sent by the JESD204C interface. The data conversion methods are applicable to a circuit design adopting the JESD204C high-speed interface technology, and are also applicable to a circuit design of the issued the protocols such as JESD204C.1 and JESD204_USR. The implementations of the present disclosure realize conversion of related data of JESD204B, and overcome problems and defects of existing conversion methods for the related data of JESD204B that a circuit of a transport layer of JESD204B designed according to the existing conversion methods is large in area and power consumption and correct use by users is significantly affected due to the defects of complex circuit and inconvenient application of the existing conversion methods. The implementations of the present disclosure relate to complete content parameterization, and the re-ordering function and the bit-width conversion function for shifting related to the implementations of the present disclosure are performed according to the software configuration, so that the functions have good flexibility and universality. The whole circuit structure according to the implementations of the present disclosure is simple, and the bit-width conversion is performed using the shift register, so that hardware resources are reduced, and power consumption of the circuit is saved.

In a case where the sample data is acquired, the operations may be as follows: acquiring the sample data, and acquiring a channel associated clock of the sample data and a channel associated clock of data (the link-layer transmission data) to be output; reordering the sample data; performing the data frequency division and combination on the data output after the reordering; performing the cross-clock operation on the data; and performing the bit-width conversion on the data subjected to the cross-clock operation. In a case where the link-layer transmission data is acquired, the operations are as follows: acquiring a channel associated clock of the link-layer transmission data and a channel associated clock (a sampling clock) of the sample data to be output; performing the data bit-width conversion on the link-layer transmission data; performing the cross-clock operation on the data subjected to the bit-width conversion; and performing the frequency multiplication and splitting on the data output after the cross-clock operation, and reordering the split data to obtain the sample data.

In the implementations of the present disclosure, the above data conversion method may be implemented by a plurality of modules: a data reordering module configured to reorder the received sample data, which mainly includes adjusting a transmission order of the multiple channels of sample data according to requirements of the transport layer of the JESD204C interface; a data frequency division module mainly configured to perform the frequency division and combination on the data involved in two or more beats of the shift register before and after the current operation of the shift register in a scenario of the present disclosure where the bit width of the input data to be processed is less than that of the output data; a cross-clock module mainly configured to perform the cross-clock operation on the data; and a bit-width conversion module configured to perform the bit-width conversion on the data output after the cross-clock operation.

Or, the above data conversion method may be implemented by a plurality of modules: a bit-width conversion module configured to perform the bit-width conversion on the link-layer transmission data output after the cross-clock operation; a cross-clock module mainly configured to perform the cross-clock operation on the link-layer transmission data; a data frequency multiplication module mainly configured to perform the frequency multiplication and splitting on the data output after the cross-clock operation in a scenario of the present disclosure where the bit width of the input data is greater than that of the output data; and a data reordering module mainly configured to reorder the data output by the data frequency multiplication module according to the requirements of the transport layer of the JESD204C interface, so as to meet a requirement for a transmission order of the sample data.

**In** addition to the parameters specified for the transport layer by JESD204C, the information which needs to be obtained in advance in the present disclosure includes: the maximum number M of data converters in a circuit and the maximum number L of transport lanes in the circuit. Here, M and L do not refer to the maximum number of converters supported by a current device and the maximum number of transport lanes supported by the current device, but refer to a minimum size capable of embodying a rule of an operating cycle of the circuit. For example, the maximum number of the converters supported by the current device is 64, and the maximum number of the transport lanes supported by the current device is 16, and a rule of all operating scenarios can be embodied through a principle of every eight converters and every two transport lanes in the overall circuit, that is, the (64, 16) circuit is actually repeated accumulation of eight (8, 2) circuits, so M=8 and L=2 in this example.

The maximum number of the channels of the sample data transmitted on one lane is n, and the maximum number of lanes on which one channel of sample data can be transmitted is k. The bit width of the data transmitted on each lane is denoted by w. In the implementations of the present disclosure, the reordering module is instantiated for M times, a data routing and frequency division module is instantiated for L times, the cross-clock module is instantiated for L times, and the data bit-width conversion module is instantiated for L times.

The operations of converting the sample data to the link-layer transmission data may be as follows: S1, performing a reordering function on the input sample data; S2, performing the data frequency division and combination on the newly ordered data as required; S3, performing the cross-clock operation on the data; and S4, performing the bit-width conversion on the data to obtain the link-layer transmission data.

In the operation S1, a corresponding hardware circuit for each channel of sample data includes a configuration information module, a multi-channel data selection module, and a memory module. The configuration information module stores configuration information, the multi-channel data selection module is configured to select one channel of output data from multiple channels of output data, and the memory module performs a data storage function.

According to the specification of the protocol, due to different values of a parameter S (oversample), the sample data are transmitted on a lane in a chronological order, and meanwhile, positions of the sample data may be interchanged at a same moment.

In order to deal with the chronological order of the transmission of the sample data on the lane, for multiple channels of sample data input at a same moment, the data to appear first on the lane in following processing is written to the low address of the memory, and the data to appear afterwards on the lane is written to the high address of the memory. In order to deal with the interchange of the positions of the multiple channels of sample data at a same moment, contents of write data of each memory are derived from selective output of M channels of sample data. Write addresses of each memory and selection information of the write data are configured in advance through software, and the circuit operates according to the configuration information.

For each memory, a width of the memory is equal to the transmission bit width N' of the sample data, a depth of the memory is twice of the desired maximum value of S, an write operation on the memory is performed according to the configuration information, and a read operation on the memory is performed in ascending order of the read addresses. As shown in FIG. 4, the sample data is input, and the newly ordered data, which is the reordered sample data, is output.

**In** the operation S2, M channels of newly ordered data output after the operation S1 are collectively routed to n channels of data, and the n channels of data are subjected to the frequency division processing, as shown in FIG. 5.

Considering that one lane of the circuit can transmit maximum n channels of sample data, the number of the channels of sample data transmitted by one certain lane may be less than n in practical applications, so the sample data to be transmitted needs to be selected from the M channels of sample data, which is a static selection process.

The frequency division processing of the n channels of data is performed in the following two cases.

In the case where n * N' is less than w, the data having the bit width of n * N' is subjected to the x-fold frequency division, and a value of x is configured through the software based on a principle that the minimum value of x that enables n * N'* x to be greater than w is configured as the value of x. When the data is subjected to the frequency division, the splicing operation is performed on the data involved in the x beats of the shift register before and after the current operation of the shift register according to a certain order (from a high position to a low position, or from a low position), the data output by the splicing operation has the bit width of n * N'* x, and meanwhile, a validity indication signal dv of output data is correspondingly sent out when the whole x-fold splicing operation is completed once, and the validity indication signal is set to "invalid" when the whole splicing operation is not completed.

In the case where n * N' is greater than or equal to w, the data is directly transmitted in a pass-through manner without being subjected to any processing, that is, it may be understood as that the data is subjected to 1-fold frequency division, and the corresponding validity indication signal is always set to "valid".

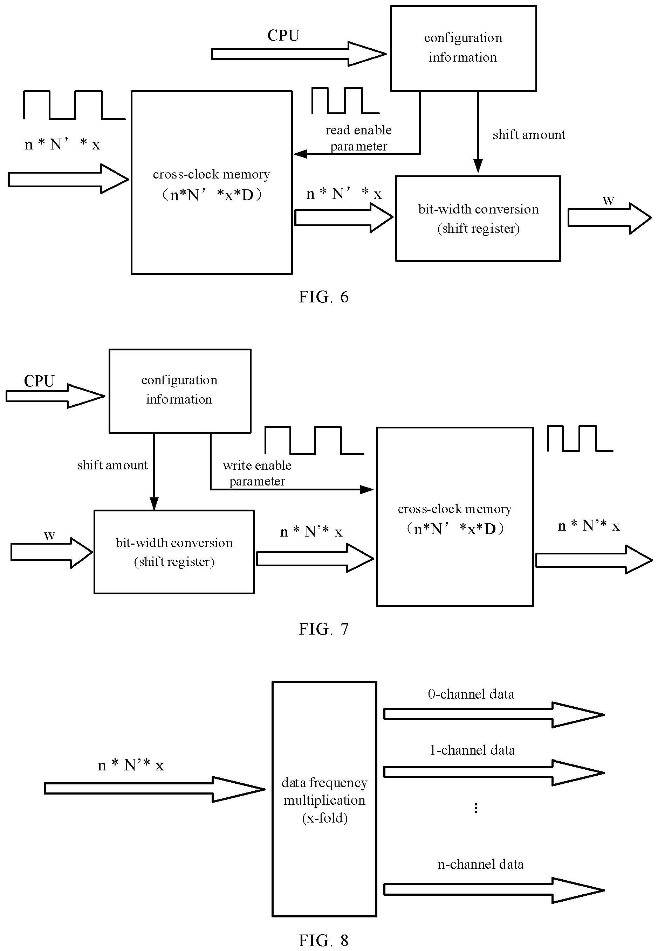

In the operation S3, the cross-clock function to transfer the frequency-divided data from the sampling clock to a link transmission clock is completed, as shown in FIG. 6, and the cross-clock function is achieved through read and write control over the memory. The data bit width of the memory is n * N'* x . When dv is set to "valid", the data is sequentially written in ascending order of write address, and the read operation of the memory is initiated when the memory is written to half of the depth of the memory.

In the operation S4, as shown in FIG. 6, the data having the bit width of n*N'* x is subjected to the cross-clock operation to be transferred to the link layer/transport layer clock, and conversion from the bit width of n*N'*x to the bit width of w is achieved in a link layer clock domain. A corresponding hardware circuit for each lane includes: a configuration information module, a cross-clock module (as shown in Fig. 6), and a bit-width conversion module. The configuration information module stores information needed by the bit-width conversion and read enable information of the memory, the memory is configured to cache cross-clock data, and the bit-width conversion module performs the bit-width conversion according to the configuration information.

The bit-width conversion module is implemented as the shift register herein, and a bit width of the shift register is n * N'* x + w .

An operating principle of the bit-width conversion module is as follows: when the circuit starts to operate, the read enable parameter rd_en of the memory is set to be valid, the data is read from the memory, the read data is sent to the shift register, and meanwhile, the counter cnt is set to represent the data left in the shift register in the next beat of the shift register. If cnt is not less than w, indicating that the data in the shift register is enough to be output, no new data needs to be read from the memory, so the read enable parameter rd_en is set to be invalid, and meanwhile, cnt is set to satisfy cnt = cnt - w . If cnt is less than w, indicating that the data in the shift register is not enough for the next beat of the shift register, new data needs to be read from the memory, so the read enable parameter rd_en is set to be valid, and meanwhile, cnt is set to satisfy cnt = cnt - w + n * N'* x .

In the case where rd_en is invalid, the data in the low w bits of the shift register is directly sent, and meanwhile, the shift amount shift_num of the shift register satisfies shift_num = w. In the case where rd_en is valid, the data in the low w bits of the shift register is directly sent, and meanwhile, the shift amount shift_num of the shift register satisfies shift_num = w-cnt.

Two kinds of configuration information are used here: one for controlling the read enable parameter rd_en of the read operation of the memory, and the other for controlling the shift amount shift_num of the shift register. Based on the above principle, as long as the bit widths before and after the bit-width conversion are obtained, the two kinds of configuration information may be calculated. Therefore, the two kinds of configuration information are written to the configuration information module in advance. When the circuit starts to operate, the configuration information is read from the configuration information module, and the bit-width conversion is performed according to the configuration information.

The operations of converting the link-layer transmission data to the sample data to may be as follows: S5, performing a reordering function on the input link-layer transmission data; S6, performing the data frequency division and combination on the newly or ordered data as required; S7, performing the cross-clock operation on the data; and S8, performing the bit-width conversion on the data to obtain the sample data.

In addition to the parameters specified for the transport layer by JESD204C, the information which needs to be obtained in advance in the present disclosure includes: the maximum number of channels of the sample data transmitted on one lane is n, and the maximum number of lanes on which one channel of sample data can be transmitted is l. The bit width of the data transmitted on each lane is defined as w.

In the operation S5, as shown in FIG. 7, conversion from the bit width of w to the bit width of n * N'* x is achieved in the link layer, a bit-width conversion clock is an operating clock of the link layer, and meanwhile, the data subjected to the bit-width conversion is subjected to the cross-clock operation to a domain of the sampling clock. A corresponding hardware circuit for each lane includes: a configuration information module, a bit-width conversion module, and a cross-clock module. The configuration information module stores information needed by the bit-width conversion and write enable information of the memory, the memory is configured to cache cross-clock data, and the bit-width conversion module performs the bit-width conversion according to the configuration information.

The bit-width conversion module is implemented as the shift register herein, and a bit width of the shift register is n * N'* x + w .

An operating principle of the bit-width conversion module is as follows: when the circuit starts to operate, the input data having the bit width of w is continuously sent to the shift register, and meanwhile, the counter cnt is set to represent the data left in the shift register in the next beat of the shift register. If cnt is not less than n*N'*x - w, indicating that the data in the shift register is enough for an output of data having the bit width of n * N'* x after the data having the bit width of w is input to the shift register in the next beat of the shift register, so the data having the bit width of n * N'* x in the low bits of the shift register needs to be read from the shift register in the next beat of the shift register, the write enable parameter wr_en is set to be valid, the data read is written to the memory, and meanwhile, cnt is set to satisfy cnt =cnt+w - n * N'* x . If cnt is less than n * N'*x -w, indicating that the data in the shift register is not enough for the output of the data having the bit width of n * N'* x after the data having the bit width of w is input to the shift register in the next beat of the shift register, so no data is read from the shift register in the next beat of the shift register, the write enable parameter wr_en is set to be invalid, and meanwhile, cnt is set to satisfy cnt = cnt + w .

In the case where wr_en is invalid, the data having the bit width of n * N'* x in the low bits of the shift register is not directly sent, at this time, the shift amount shift_num of the shift register satisfies shift_num = w, and in the case where wr_en is valid, the data having the bit width of n * N'* x in the low bits of the shift register is directly sent, and meanwhile, the shift amount shift_num of the shift register satisfies shift _num = n * N'* x - cnt .

Two kinds of configuration information are used here: one for controlling the write enable parameter wr_en of a write operation of the memory, and the other for controlling the shift amount shift_num of the shift register. Based on the above principle, as long as the bit widths before and after the bit-width conversion are obtained, the two kinds of configuration information may be calculated. Therefore, the two kinds of configuration information are written to the configuration information module in advance. When the circuit starts to operate, the configuration information is read from the configuration information module, and the bit-width conversion is performed according to the configuration information.

In the operation S6, as shown in FIG. 7, the circuit performs the cross-clock function to transfer the frequency-divided data from the sampling clock to the link transmission clock, and the cross-clock function is achieved through read and write control over the memory. The data bit width of the memory is n * N'* x .

In the operation S5, when the write enable parameter wr_en is valid, the data is sequentially written in ascending order of the write address, and a read operation of the memory is initiated when the memory is written to half of a depth of the memory.

The control over the read operation of the memory is related to the operation S7, at this time, a bit width for data reading is n*N'* x . The data reading may not be continuously performed, and may be performed when the corresponding signal dv is set to "valid", and the signal dv is generated based on a principle illustrated by FIG. 8, and determines the data bit width in the operation S6. Meanwhile, the data output in the operation S6 is subjected to the frequency multiplication and splitting, which is performed in the following two cases.

In the case where n * N' is less than w, the data having the bit width of n * N' is subjected to the x-fold frequency multiplication, and a value of x is configured through the software based on a principle that the minimum value of x that enables n * N'* x to be greater than w is configured as the value of x, at this time, the data bit width is n*N'* x, and the corresponding signal dv is set to "valid" every x sampling clocks. When the data is subjected to the frequency multiplication, the data having the bit width of n*N'*x for one beat of the shift register is sequentially subjected to a splitting operation according to a certain order (from a high position to a low position, or from a low position), the data output by the splitting has the bit width of n * N'. The data having the bit width of n * N'* x before the frequency multiplication and splitting is discontinuous, and the data having the bit width of n * N' after the splitting is continuous.

In the case where n * N' is greater than or equal to w, the data is directly transmitted in a pass-through manner without being subjected to any processing, that is, it may be understood as that the data is subjected to 1-fold frequency multiplication, and the corresponding validity indication signal dv is always set to "valid".

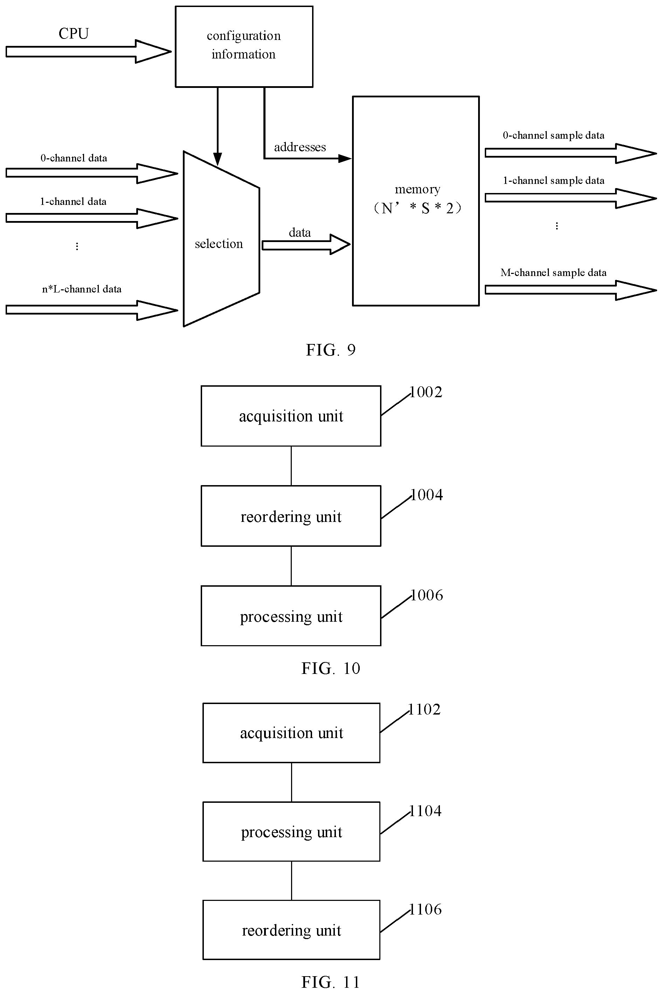

The operation S8 is shown in FIG. 9, and a corresponding hardware circuit for each channel of sample data includes a configuration information module, a multi-channel data selection module, and a memory module. The configuration information module stores configuration information, the multi-channel data selection module is configured to select one channel of output data from multiple channels of output data, and the memory module performs a data storage function.

According to the specification of the protocol, due to the different values of the parameter S, the sample data are transmitted on a lane in a chronological order, and meanwhile, positions of the sample data may be interchanged at a same moment. Reversely, when converting the data output in Fig. 9 to the sample data, a chronological order of the data output in the Fig. 9 needs to be adjusted, and positions of the data in a same beat of the shift register need to be adjusted for all lanes.

In order to deal with the adjustment of the chronological order, for multiple channels of sample data input at a same moment, the sample data to appear first in following processing is written to the low address of the memory, and the data to appear afterwards is written to the high address of the memory. In order to deal with the interchange of the positions of the multiple channels of sample data at a same moment, contents of write data of each memory are derived from selective output of k*I channels of data. Write addresses of each memory and selection information of the write data are configured in advance through the software, and the circuit operates according to the configuration information.

For each memory, a width of the memory is equal to the transmission bit width N' of the sample data, a depth of the memory is twice of the desired maximum value of S, an write operation on the memory is performed according to the configuration information, and a read operation on the memory is performed in ascending order of the read addresses.

In the implementations of the present disclosure, two memory modules and two configuration information modules need to be used for converting the sample data to the link-layer transmission data, and two memory modules and two configuration information modules need to be used for converting the link-layer transmission data to the sample data. The four memory modules are different from each other, so are the four configuration information modules. The configuration information for converting the sample data to the link-layer transmission data is also different from that for converting the link-layer transmission data to the sample data.

Through the above description of the implementations, those of ordinary skill in the art can understand clearly that the methods according to the above implementations may be implemented by software together with a necessary general-purpose hardware platform, and may also be implemented by hardware, and the former is better in most cases. Based on such understanding, the technical solutions of the present disclosure or a part of the technical solutions of the present disclosure contributing to the existing technology may be implemented in the form of a software product, which is stored in a storage medium (such as a Read-Only Memory (ROM)/Random Access Memory (RAM), a magnetic disk and an optical disc) and includes several instructions to enable a terminal device (which may be a mobile phone, a computer, a server or a network device) to perform the methods described in the implementations of the present disclosure.

An implementation of the present disclosure further provides a data conversion apparatus configured to implement the above implementations and preferred implementations, and what is described above will not be repeated below. The term "module" used below refers to software, hardware, or a combination of software and hardware that can perform predetermined functions. Although the apparatus described in the implementation below is better implemented by software, the implementations of the apparatus by hardware or a combination of software and hardware are possible and can be conceived.

FIG. 10 is a block diagram of the data conversion apparatus according to the implementation of the present disclosure. As shown in FIG. 10, the apparatus includes: an acquisition unit 1002 configured to acquire sample data obtained by sampling in a network communication process; a reordering unit 1004 configured to reorder the sample data; and a processing unit 1006 configured to perform a cross-clock operation and a bit-width conversion operation on the reordered sample data to obtain link-layer transmission data after conversion.

As an alternative example, the reordering unit includes: a reordering module configured to use a configuration information module, a multi-channel data selection module, and a memory module to reorder the sample data.

As an alternative example, the reordering module includes: a reordering sub-module configured to select output data from multiple channels of sample data, write the output data to a first memory module, and read the output data from the first memory module according to an order to obtain the reordered sample data.

As an alternative example, the reordering sub-module is further configured to control the multi-channel data selection module to select the output data from the multiple channels of sample data according to selection configuration information in a first configuration information module and write the selected output data to the first memory module according to write address information in the first configuration information module, with the data which needs to appear first on a lane written to a low address of the first memory module, and the data which needs to appear afterwards on the lane written to a high address of the first memory module; and acquire the reordered sample data in ascending order of read addresses of the first memory module.

The processing unit includes: a write module configured to write the sample data to a second memory module according to a first clock; and a read module configured to read the sample data from the second memory module according to a second clock, with the first clock being different from the second clock.

The processing unit further includes: a processing module configured to acquire a read enable parameter rd_en and a shift amount shift_num of a shift register, store the sample data of the second memory module in the shift register according to rd_en and shift_num, and perform a corresponding shift operation.

The processing module is further configured to perform the following operations through a bit-width conversion module: acquiring the read enable parameter rd_en and the shift amount shift_num of the shift register which are stored in a second configuration information module, and setting a parameter cnt which represents the data left in the shift register in a next beat of the shift register; in a case where cnt is greater than or equal to w, determining that the read enable parameter rd_en is invalid and cnt = cnt - w , wherein the sample data of the second memory module is prohibited from being stored in the shift register in a case where rd_en is invalid, and the sample data of the second memory module is read and stored in the shift register in a case where rd_en is valid; in a case where cnt is less than w, determining that rd_en is valid and cnt = cnt - w + n * N'*, where n denotes the number of channels of the reordered sample data, N' denotes a transmission bit width of the reordered sample data, w denotes a bit width of data transmitted on each lane, and x denotes a frequency division multiplying factor for performing frequency division and combination on the reordered sample data; and in a case where rd_en is invalid, directly sending the data in low w bits of the shift register and simultaneously determining that the shift amount shift_num of the shift register satisfies shift_num=w, and in a case where rd_en is valid, directly sending the data in the low w bits of the shift register and simultaneously determining that the shift amount shift_num of the shift register satisfies shift_num=w-ent.

As an alternative example, the apparatus further includes: a frequency division and combination unit configured to perform data frequency division and combination on the reordered sample data before the cross-clock operation and the bit-width conversion operation are performed on the reordered sample data.

The processing unit includes: a cross-clock module configured to perform the cross-clock operation on the sample data subjected to the data frequency division and combination.

As an alternative example, the frequency division and combination unit includes:
a frequency division and combination module configured to perform the following operations: in the reordered sample data, in a case where n * N' is less than w, performing x-fold frequency division on the data having a bit width of n * N', and splicing the data involved in x beats of the shift register before and after the current operation of the shift register together to obtain data having a bit width of n*N'*x , where n denotes the number of the channels of the reordered sample data, N' denotes the transmission bit width of the reordered sample data, w denotes the bit width of the data transmitted on each lane, x denotes the frequency division multiplying factor, n * N'* x is greater than w, and n*N'*(x-1) is less than w; and in the reordered sample data, in a case where n * N' is greater than w, directly transmitting the reordered sample data in a pass-through manner.

FIG. 11 is a block diagram of another data conversion apparatus according to an implementation of the present disclosure. As shown in FIG. 11, the apparatus includes: an acquisition unit 1102 configured to acquire link-layer transmission data to be converted in a network communication process; a processing unit 1104 configured to perform a bit-width conversion operation and a cross-clock operation on the link-layer transmission data to obtain the processed link-layer transmission data; and a reordering unit 1106 configured to determine data obtained after reordering the processed link-layer transmission data as sample data.

The processing unit includes: a processing module configured to acquire a write enable parameter wr_en and a shift amount shift_num of a shift register, use shift_num to control the shift register to operate, and write output data of the shift register to a third memory module.

The processing module is further configured to control a bit-width conversion module to perform the following operations: acquiring the write enable parameter wr_en and the shift amount shift_num of the shift register from a third configuration information module, and setting a parameter cnt which represents the data left in the shift register in a next beat of the shift register; in a case where cnt is greater than or equal to n * N'* x -w, determining that the write enable parameter wr_en is valid and cnt = cnt+w -n * N'* x, wherein the link-layer transmission data in the shift register is read and written to the third memory module in a case where wr_en is valid, and the link-layer transmission data in the shift register is prohibited from being read or written to the third memory module in a case where wr_en is invalid; in a case where cnt is less than n*N'*x-w, determining that wr_en is invalid and cnt= cnt + w , where n denotes the maximum number of channels of the sample data transmitted on a lane, N' denotes a transmission bit width of the sample data after reordering, w denotes a bit width of data transmitted on each lane, and x denotes a frequency division multiplying factor for performing frequency division and combination on the link-layer transmission data; and in a case where wr_en is invalid, prohibiting the data in low n * N'* x bits of the shift register from being sent and simultaneously determining that the shift amount shift_num of the shift register satisfies shift_num =w, and in a case where wr_en is valid, directly sending the data in the low n * N'* x bits of the shift register, writing the data in the low n * N'* x bits of the shift register to the third memory module, and simultaneously determining that the shift amount shift_num of the shift register satisfies shift_num =w-cnt.

As an alternative example, the processing unit includes: a write module configured to write the link-layer transmission data to the third memory module according to a second clock; and a read module configured to read the link-layer transmission data from the third memory module according to a first clock, with the first clock being different from the second clock.

As an alternative example, the apparatus further includes: a frequency division and combination unit configured to perform, after the bit-width conversion operation and the cross-clock operation are performed on the link-layer transmission data, a frequency division and combination operation on the processed link-layer transmission data.

The reordering unit includes: a determination module configured to determine the data obtained by reordering the link-layer transmission data subjected to the frequency division and combination operation as the sample data.

As an alternative example, the frequency division and combination unit includes:
a frequency division and combination module configured to perform the following operations: in the processed link-layer transmission data, in a case where n * N' is less than w, performing x-fold frequency multiplication on the data having a bit width of n * N'* x to obtain output data having a bit width of n * N', with the data having the bit width of n*N'*x before the frequency multiplication and splitting being discontinuous, and the data having the bit width of n * N' after the splitting being continuous; and in a case where n * N' is greater than or equal to w, directly transmitting the processed link-layer transmission data in a pass-through manner, where n denotes the maximum number of the channels of the sample data transmitted on the lane, N' denotes the transmission bit width of the sample data after reordering, and x denotes the frequency division multiplying factor for performing the frequency division and combination on the link-layer transmission data.

As an alternative example, the reordering unit includes: a reordering module configured to select output data from the processed link-layer transmission data, write the output data to a fourth memory module, and read the output data from the fourth memory module according to an order to obtain the sample data after reordering.

As an alternative example, the reordering module is further configured to control a multi-channel data selection module to select the output data from the processed link-layer transmission data according to selection configuration information in a fourth configuration information module and write the selected output data to the fourth memory module according to write address information in the fourth configuration information module, with the data which needs to appear first written to a low address of the fourth memory module, and the data which needs to appear afterwards written to a high address of the fourth memory module; and determine the reordered data as the sample data in ascending order of read addresses of the fourth memory module.

References may be made to the above examples for the other examples of the present implementation, and thus the other examples of the present implementation are not described in detail here.

It should be noted that each of the above modules may be implemented by software or hardware. When by hardware, the modules may be implemented in following ways, but not limited to the following ways: all the modules are located in a same processor; or the modules are randomly combined and located in different processors.

An implementation of the present disclosure further provides a computer-readable storage medium having a computer program stored therein, and the computer program is configured to perform, when being run, the operations according to any one of the method implementations described above.

In an exemplary implementation, the computer-readable storage medium may include, but is not limited to: various media capable of storing a computer program, such as a USB flash disk, an ROM, an RAM, a mobile hard disk, a magnetic disk and an optical disc.

An implementation of the present disclosure further provides an electronic apparatus, including a memory having a computer program stored therein, and a processor configured to run the computer program to perform the operations according to any one of the method implementations described above.

In an exemplary implementation, the electronic apparatus may further include a transmission device connected to the processor, and an input/output device connected to the processor.

Reference may be made to the examples described in the above implementations and exemplary implementations for examples of the present implementation, and thus the examples of the present implementation are not described in detail here.

Apparently, it should be understood by those of ordinary skill in the art that all the modules or operations of the present disclosure described above may be implemented by a general-purpose computing device, may be integrated in a single computing device or distributed on a network composed of a plurality of computing devices, and may be implemented by program codes executable by a computing device, so that the modules or operations can be stored in a storage device and executed by the computing device. In some cases, the operations illustrated or described may be performed in an order different from that described herein. The modules or operations may be separately made into integrated circuit modules, or some of the modules or operations may be made into a single integrated circuit module. Thus, the present disclosure is not limited to any specific combination of hardware and software.

## Claims

1. A data conversion method, comprising:
acquiring (S202) sample data obtained by sampling in a network communication process;
reordering (S204) the sample data; and
performing (S206) a cross-clock operation and a bit-width conversion operation on the reordered sample data to obtain link-layer transmission data after conversion,
wherein performing (S206) the cross-clock operation on the reordered sample data comprises: writing the sample data to a second memory module according to a first clock; and reading the sample data from the second memory module according to a second clock, wherein the first clock is different from the second clock, and
wherein performing (S206) the bit-width conversion operation on the reordered sample data comprises: acquiring a read enable parameter rd_en and a shift amount shift_num of a shift register, and storing the reordered sample data of the second memory module in the shift register and performing a corresponding shift operation, according to rd_en and shift_num,
**characterized in** further comprising:
performing the following operations by a bit-width conversion module: acquiring the read enable parameter rd_en and the shift amount shift_num of the shift register which are stored in a second configuration information module, and setting a parameter cnt, wherein cnt represents data left in the shift register in a next beat of the shift register;
in a case where cnt is greater than or equal to w, determining that the read enable parameter rd_en is invalid and cnt = cnt-w,
in a case where cnt is less than w, determining that rd_en is valid and cnt =cnt - w + n*N'* x; wherein n denotes a number of channels of the reordered sample data, N' denotes a transmission bit width of the reordered sample data, w denotes a bit width of data transmitted on each lane, and x denotes a frequency division multiplying factor for performing frequency division and combination on the reordered sample data; and
in a case where rd_en is invalid, the reordered sample data of the second memory module is prohibited from being stored in the shift register, directly sending data in low w bits of the shift register and simultaneously determining that the shift amount shift_num of the shift register satisfies shift_num=w, and in a case where rd_en is valid, the reordered sample data of the second memory module is read and stored in the shift register, directly sending the data in the low w bits of the shift register and simultaneously determining that the shift amount shift_num of the shift register satisfies shift_num = w - cnt .

2. The method of claim 1, wherein reordering (S204) the sample data comprises:
selecting output data from multiple channels of sample data, writing the output data to a first memory module, and reading the output data from the first memory module according to an order to obtain the reordered sample data.

3. The method of claim 2, wherein selecting the output data from the multiple channels of sample data, writing the output data to the first memory module, and reading the output data from the first memory module according to the order to obtain the reordered sample data comprises:
selecting, by a multi-channel data selection module, the output data from the multiple channels of sample data according to selection configuration information in a first configuration information module, and writing, by the multi-channel data selection module, the selected output data to the first memory module according to write address information in the first configuration information module, wherein the data which needs to appear first on a lane is written to a low address of the first memory module, and the data which needs to appear afterwards on the lane is written to a high address of the first memory module; and
acquiring the reordered sample data in ascending order of read addresses of the first memory module.

4. The method of any one of claims 1 to 3, wherein
before performing (S206) the cross-clock operation and the bit-width conversion operation on the reordered sample data, the method further comprises: performing data frequency division and combination on the reordered sample data; and
performing the cross-clock operation on the reordered sample data comprises: performing the cross-clock operation on the sample data subjected to the data frequency division and combination.

5. The method of claim 4, wherein performing the data frequency division and combination on the reordered sample data comprises:
in the reordered sample data, in a case where n * N' is less than w, performing x-fold frequency division on the data having a bit width of n*N', and splicing the data involved in x beats of the shift register before and after a current operation of the shift register together to obtain data having a bit width of n * N'* x, where n denotes a number of channels of the reordered sample data, N' denotes a transmission bit width of the reordered sample data, w denotes a bit width of the data transmitted on each lane, x denotes a frequency division multiplying factor, n * N'* x is greater than w, and n*N'*(x-1) is less than w; and
in the reordered sample data, in a case where n * N' is greater than w, directly transmitting the reordered sample data in a pass-through manner.

6. The method of claim 1, wherein the sample data is sample data under JESD204C, and the link-layer transmission data is link-layer transmission data under JESD204C.

7. A data conversion method, comprising:
acquiring (S302) link-layer transmission data to be converted in a network communication process;
performing (S304) a bit-width conversion operation and a cross-clock operation on the link-layer transmission data to obtain the processed link-layer transmission data;
reordering the processed link-layer transmission data; and
determining (S306) data obtained by reordering the processed link-layer transmission data as first data,
wherein performing (S304) the bit-width conversion operation on the link-layer transmission data comprises: acquiring a write enable parameter wr_en and a shift amount shift_num of a shift register, using shift_num to control the shift register to operate, and writing output data of the shift register to a third memory module,
**characterized in that**, acquiring the write enable parameter wr_en and the shift amount shift_num of the shift_register further comprises:
perform the following operations by a bit-width conversion module: acquiring the write enable parameter wr_en and the shift amount shift_num of the shift register from a third configuration information module, and setting a parameter cnt, wherein cnt represents data left in the shift register in a next beat of the shift register;
in a case where cnt is greater than or equal to n * N'* x -w, determining that the write enable parameter wr_en is valid and cnt= cnt + w - n * N'* x,
in a case where cnt is less than n * N'* x - w, determining that wr_en is invalid and cnt=cnt+w ; wherein n denotes a maximum number of channels of the first data transmitted on a lane, N' denotes a transmission bit width of the first data after reordering, w denotes a bit width of data transmitted on each lane, and x denotes a frequency division multiplying factor for performing frequency division and combination on the link-layer transmission data; and
in a case where wr_en is invalid, prohibiting the data in low n * N'* x bits of the shift register from being sent and written to the third memory module and simultaneously determining that the shift amount shift_num of the shift register satisfies shift_num = w, and in a case where wr_en is valid, directly sending data in low n * N'* x bits of the shift register, writing the data in the low n * N'* x bits of the shift register to the third memory module, and simultaneously determining that the shift amount shift_num of the shift register satisfies shift_num = w-ent .

8. The method of claim 7, wherein performing (S304) the cross-clock operation on the link-layer transmission data comprises:
writing the link-layer transmission data to the third memory module according to a second clock; and
reading the link-layer transmission data from the third memory module according to a first clock, wherein the first clock is different from the second clock,
or, wherein
after performing (S304) the bit-width conversion operation and the cross-clock operation on the link-layer transmission data, the method further comprises: performing a frequency division and combination operation on the processed link-layer transmission data; and
determining the data obtained by reordering the processed link-layer transmission data as the first data comprises: determining the data obtained by reordering the link-layer transmission data subjected to the frequency division and combination operation as the first data,
or wherein determining (S306) the data obtained by reordering the processed link-layer transmission data as the first data comprises:
selecting output data from the processed link-layer transmission data, writing the output data to a fourth memory module, and reading the output data from the fourth memory module according to an order to obtain the first data after reordering.

9. The method of claim 8, wherein performing the frequency division and combination operation on the processed link-layer transmission data comprises:
in the processed link-layer transmission data, in a case where n * N' is less than w, performing x-fold frequency multiplication on data having a bit width of n * N'* x to obtain output data having a bit width of n*N', wherein the data having the bit width of n * N'* x before frequency multiplication and splitting is discontinuous, and the data having the bit width of n * N' after the splitting is continuous; and
in a case where n * N' is greater than or equal to w, directly transmitting the processed link-layer transmission data in a pass-through manner, where n denotes a maximum number of channels of the first data transmitted on a lane, N' denotes a transmission bit width of the first data after reordering, and x denotes a frequency division multiplying factor for performing the frequency division and combination on the link-layer transmission data.

10. The method of claim 8, wherein determining (S306) the data obtained by reordering the processed link-layer transmission data as the first data comprises:
selecting, by a multi-channel data selection module, the output data from the processed link-layer transmission data according to selection configuration information in a fourth configuration information module, and writing, by the multi-channel data selection module, the selected output data to the fourth memory module according to write address information in the fourth configuration information module, wherein the data which needs to appear first is written to a low address of the fourth memory module, and the data which needs to appear afterwards is written to a high address of the fourth memory module; and
determining the reordered data as the first data in ascending order of read addresses of the fourth memory module.

11. The method of claim 7, wherein the first data is sample data under JESD204C, and the link-layer transmission data is link-layer transmission data under JESD204C.

12. A computer-readable storage medium having a computer program stored therein, wherein, when being executed by a processor, the computer program implements operations in the method of any one of claims 1 to 6 or operations in the method of any one of claims 7 to 11.

13. An electronic apparatus, comprising a memory, a processor and a computer program which is stored on the memory and executable on the processor, wherein, when executing the computer program, the processor implements operations in the method of any one of claims 1 to 6 or operations in the method of any one of claims 7 to 11.

## Patentansprüche

1. Verfahren zur Datenumwandlung, umfassend:
Erfassen (S202) von Abtastdaten, die durch Abtasten in einem Netzwerkkommunikationsprozess erhalten werden;
Umordnen (S204) der Abtastdaten; und
Durchführen (S206) einer Kreuztaktoperation und einer Bitbreitenumwandlungsoperation an den umgeordneten Abtastdaten, um nach der Umwandlung Übertragungsdaten der Verbindungsschicht zu erhalten,
wobei das Durchführen (S206) der Kreuztaktoperation an den umgeordneten Abtastdaten umfasst: Schreiben der Abtastdaten in ein zweites Speichermodul gemäß einem ersten Takt; und Lesen der Abtastdaten aus dem zweiten Speichermodul gemäß einem zweiten Takt, wobei sich der erste Takt von dem zweiten Takt unterscheidet, und
wobei das Durchführen (S206) der Bitbreitenumwandlungsoperation an den umgeordneten Abtastdaten umfasst: Erfassen eines Leseaktivierungsparameters rd_en und eines Verschiebungsbetrags shift_num eines Verschieberegisters, und Speichern der umgeordneten Abtastdaten des zweiten Speichermoduls in dem Verschieberegister und Durchführen einer entsprechenden Verschiebungsoperation gemäß rd_en und shift_num,
**dadurch gekennzeichnet, dass** es ferner umfasst:
Durchführen der folgenden Operationen durch ein Bitbreitenumwandlungsmodul: Erfassen des Leseaktivierungsparameters rd_en und des Verschiebungsbetrags shift_num des Verschieberegisters, die in einem zweiten Konfigurationsinformationsmodul gespeichert sind, und Einstellen eines Parameters cnt, wobei cnt Daten repräsentiert, die in dem Verschieberegister in einem nächsten Takt des Verschieberegisters verbleiben;
in einem Fall, in dem cnt größer oder gleich w ist, Bestimmen, dass der Leseaktivierungsparameter rd_en ungültig ist, und cnt = cnt - w,
in einem Fall, in dem cnt kleiner als w ist, Bestimmen, dass rd_en gültig ist, und cnt = cnt - w + n * N' * x ; wobei n eine Anzahl von Kanälen der umgeordneten Abtastdaten bezeichnet, N' eine Übertragungsbitbreite der umgeordneten Abtastdaten bezeichnet, w eine Bitbreite von Daten bezeichnet, die auf jeder Spur übertragen werden, und x einen Frequenzteilungsmultiplikationsfaktor zum Durchführen von Frequenzteilung und -kombination an den umgeordneten Abtastdaten bezeichnet, und
in einem Fall, in dem rd_en ungültig ist, verhindert wird, dass die umgeordneten Abtastdaten des zweiten Speichermoduls in dem Verschieberegister gespeichert werden, direktes Senden von Daten in niedrigen w Bits des Verschieberegisters und gleichzeitiges Bestimmen, dass der Verschiebungsbetrag shift_num des Verschieberegisters shift_num = w erfüllt, und in einem Fall, in dem rd_en gültig ist, die umgeordneten Abtastdaten des zweiten Speichermoduls gelesen und in dem Verschieberegister gespeichert werden, direktes Senden der Daten in den niedrigen w Bits des Verschieberegisters und gleichzeitiges Bestimmen, dass der Verschiebungsbetrag shift_num des Verschieberegisters shift_num = w - cnt erfüllt.

2. Verfahren nach Anspruch 1, wobei das Umordnen (S204) der Abtastdaten umfasst:
Auswählen von Ausgabedaten aus mehreren Kanälen von Abtastdaten, Schreiben der Ausgabedaten in ein erstes Speichermodul und Lesen der Ausgabedaten aus dem ersten Speichermodul gemäß einer Reihenfolge, um die umgeordneten Abtastdaten zu erhalten.

3. Verfahren nach Anspruch 2, wobei das Auswählen der Ausgabedaten aus den mehreren Kanälen von Abtastdaten, Schreiben der Ausgabedaten in das erste Speichermodul und Lesen der Ausgabedaten aus dem ersten Speichermodul gemäß der Reihenfolge, um die umgeordneten Abtastdaten zu erhalten, umfasst:
Auswählen, durch ein Mehrkanaldatenauswahlmodul, der Ausgabedaten aus den mehreren Kanälen von Abtastdaten gemäß Auswahlkonfigurationsinformationen in einem ersten Konfigurationsinformationsmodul und Schreiben, durch das Mehrkanaldatenauswahlmodul, der ausgewählten Ausgabedaten in das erste Speichermodul gemäß Schreibadressinformationen in dem ersten Konfigurationsinformationsmodul, wobei die Daten, die zuerst auf einer Spur erscheinen müssen, in eine niedrige Adresse des ersten Speichermoduls geschrieben werden und die Daten, die danach auf der Spur erscheinen müssen, in eine hohe Adresse des ersten Speichermoduls geschrieben werden; und
Erfassen der umgeordneten Abtastdaten in aufsteigender Reihenfolge von Leseadressen des ersten Speichermoduls.

4. Verfahren nach einem der Ansprüche 1 bis 3, wobei
vor dem Durchführen (S206) der Kreuztaktoperation und der Bitbreitenumwandlungsoperation an den umgeordneten Abtastdaten das Verfahren ferner umfasst: Durchführen von Datenfrequenzteilung und -kombination an den umgeordneten Abtastdaten; und
das Durchführen der Kreuztaktoperation an den umgeordneten Abtastdaten umfasst: Durchführen der Kreuztaktoperation an den Abtastdaten, die der Datenfrequenzteilung und -kombination unterzogen wurden.

5. Verfahren nach Anspruch 4, wobei das Durchführen der Datenfrequenzteilung und -kombination an den umgeordneten Abtastdaten umfasst:
in den umgeordneten Abtastdaten, in einem Fall, in dem n * N' kleiner als w ist, Durchführen von x-facher Frequenzteilung an den Daten mit einer Bitbreite von n * N' und Zusammenfügen der Daten, die an x Takten des Verschieberegisters beteiligt sind, vor und nach einer aktuellen Operation des Verschieberegisters, um Daten mit einer Bitbreite von n * N' * x zu erhalten, wobei n eine Anzahl von Kanälen der umgeordneten Abtastdaten bezeichnet, N' eine Übertragungsbitbreite der umgeordneten Abtastdaten bezeichnet, w eine Bitbreite der Daten bezeichnet, die auf jeder Spur übertragen werden, x einen Frequenzteilungsmultiplikationsfaktor bezeichnet, n * N' * x größer als w ist und n*N' * (x - 1) kleiner als w ist; und
in den umgeordneten Abtastdaten, in einem Fall, in dem n * N' größer als w ist, direktes Übertragen der umgeordneten Abtastdaten in einer Durchlaufweise.

6. Verfahren nach Anspruch 1, wobei die Abtastdaten Abtastdaten unter JESD204C sind und die Übertragungsdaten der Verbindungsschicht Übertragungsdaten der Verbindungsschicht unter JESD204C sind.

7. Verfahren zur Datenumwandlung, umfassend:
Erfassen (S302) von Übertragungsdaten der Verbindungsschicht, die in einem Netzwerkkommunikationsprozess umgewandelt werden sollen;
Durchführen (S304) einer Bitbreitenumwandlungsoperation und einer Kreuztaktoperation an den Übertragungsdaten der Verbindungsschicht, um die verarbeiteten Übertragungsdaten der Verbindungsschicht zu erhalten;
Umordnen der verarbeiteten Übertragungsdaten der Verbindungsschicht; und
Bestimmen (S306) von Daten, die durch Umordnen der verarbeiteten Übertragungsdaten der Verbindungsschicht erhalten werden, als erste Daten,
wobei das Durchführen (S304) der Bitbreitenumwandlungsoperation an den Übertragungsdaten der Verbindungsschicht umfasst: Erfassen eines Schreibaktivierungsparameters wr_en und eines Verschiebungsbetrags shift_num eines Verschieberegisters, Verwenden von shift_num, um den Betrieb des Verschieberegisters zu steuern, und Schreiben von Ausgabedaten des Verschieberegisters in ein drittes Speichermodul,
**dadurch gekennzeichnet, dass** das Erfassen des Schreibaktivierungsparameters wr_en und des Verschiebungsbetrags shift_num des Verschieberegisters ferner umfasst:
Durchführen der folgenden Operationen durch ein Bitbreitenumwandlungsmodul: Erfassen des Schreibaktivierungsparameters wr_en und des Verschiebungsbetrags shift_num des Verschieberegisters von einem dritten Konfigurationsinformationsmodul, und Einstellen eines Parameters cnt, wobei cnt Daten repräsentiert, die in dem Verschieberegister in einem nächsten Takt des Verschieberegisters verbleiben;
in einem Fall, in dem cnt größer oder gleich n * N' * x - w ist, Bestimmen, dass der Schreibaktivierungsparameter wr_en gültig ist, und cnt = cnt + w - n * N' * x,
in einem Fall, in dem cnt kleiner als n * N' * x - w ist, Bestimmen, dass wr_en ungültig ist, und cnt = cnt + w; wobei n eine maximale Anzahl von Kanälen der ersten Daten bezeichnet, die auf einer Spur übertragen werden, N' eine Übertragungsbitbreite der ersten Daten nach dem Umordnen bezeichnet, w eine Bitbreite von Daten bezeichnet, die auf jeder Spur übertragen werden, und x einen Frequenzteilungsmultiplikationsfaktor zum Durchführen von Frequenzteilung und -kombination an den Übertragungsdaten der Verbindungsschicht bezeichnet; und
in einem Fall, in dem wr_en ungültig ist, Verhindern, dass die Daten in niedrigen n * N' * x Bits des Verschieberegisters gesendet und in das dritte Speichermodul geschrieben werden, und gleichzeitiges Bestimmen, dass der Verschiebungsbetrag shift_num des Verschieberegisters shift_num = w erfüllt, und in einem Fall, in dem wr_en gültig ist, direktes Senden von Daten in niedrigen n * N' * x Bits des Verschieberegisters, Schreiben der Daten in den niedrigen n * N' * x Bits des Verschieberegisters in das dritte Speichermodul und gleichzeitiges Bestimmen, dass der Verschiebungsbetrag shift_num des Verschieberegisters shift_num = w - cnt erfüllt.

8. Verfahren nach Anspruch 7, wobei das Durchführen (S304) der Kreuztaktoperation an den Übertragungsdaten der Verbindungsschicht umfasst:
Schreiben der Übertragungsdaten der Verbindungsschicht in das dritte Speichermodul gemäß einem zweiten Takt; und
Lesen der Übertragungsdaten der Verbindungsschicht aus dem dritten Speichermodul gemäß einem ersten Takt, wobei sich der erste Takt von dem zweiten Takt unterscheidet,
oder wobei
nach dem Durchführen (S304) der Bitbreitenumwandlungsoperation und der Kreuztaktoperation an den Übertragungsdaten der Verbindungsschicht das Verfahren ferner umfasst: Durchführen einer Frequenzteilungs- und -kombinationsoperation an den verarbeiteten Übertragungsdaten der Verbindungsschicht; und
das Bestimmen der Daten, die durch Umordnen der verarbeiteten Übertragungsdaten der Verbindungsschicht erhalten werden, als die ersten Daten umfasst: Bestimmen der Daten, die durch Umordnen der Übertragungsdaten der Verbindungsschicht erhalten werden, die der Frequenzteilungs- und -kombinationsoperation unterzogen wurden, als die ersten Daten,
oder wobei das Bestimmen (S306) der Daten, die durch Umordnen der verarbeiteten Übertragungsdaten der Verbindungsschicht erhalten werden, als die ersten Daten umfasst:
Auswählen von Ausgabedaten aus den verarbeiteten Übertragungsdaten der Verbindungsschicht, Schreiben der Ausgabedaten in ein viertes Speichermodul und Lesen der Ausgabedaten aus dem vierten Speichermodul gemäß einer Reihenfolge, um die ersten Daten nach dem Umordnen zu erhalten.

9. Verfahren nach Anspruch 8, wobei das Durchführen der Frequenzteilungs- und -kombinationsoperation an den verarbeiteten Übertragungsdaten der Verbindungsschicht umfasst:
in den verarbeiteten Übertragungsdaten der Verbindungsschicht, in einem Fall, in dem n * N' kleiner als w ist, Durchführen von x-facher Frequenzmultiplikation an Daten mit einer Bitbreite von n * N' * x, um Ausgabedaten mit einer Bitbreite von n* N' zu erhalten, wobei die Daten mit der Bitbreite von n * N' * x vor der Frequenzmultiplikation und -teilung diskontinuierlich sind und die Daten mit der Bitbreite von n * N' nach dem Teilen kontinuierlich sind; und
in einem Fall, in dem n * N' größer oder gleich w ist, direktes Übertragen der verarbeiteten Übertragungsdaten der Verbindungsschicht in einer Durchlaufweise, wobei n eine maximale Anzahl von Kanälen der ersten Daten bezeichnet, die auf einer Spur übertragen werden, N' eine Übertragungsbitbreite der ersten Daten nach dem Umordnen bezeichnet und x einen Frequenzteilungsmultiplikationsfaktor zum Durchführen der Frequenzteilung und -kombination an den Übertragungsdaten der Verbindungsschicht bezeichnet.

10. Verfahren nach Anspruch 8, wobei das Bestimmen (S306) der Daten, die durch Umordnen der verarbeiteten Übertragungsdaten der Verbindungsschicht erhalten werden, als die ersten Daten umfasst:
Auswählen, durch ein Mehrkanaldatenauswahlmodul, der Ausgabedaten aus den verarbeiteten Übertragungsdaten der Verbindungsschicht gemäß Auswahlkonfigurationsinformationen in einem vierten Konfigurationsinformationsmodul und Schreiben, durch das Mehrkanaldatenauswahlmodul, der ausgewählten Ausgabedaten in das vierte Speichermodul gemäß Schreibadressinformationen in dem vierten Konfigurationsinformationsmodul, wobei die Daten, die zuerst erscheinen müssen, in eine niedrige Adresse des vierten Speichermoduls geschrieben werden und die Daten, die danach erscheinen müssen, in eine hohe Adresse des vierten Speichermoduls geschrieben werden; und
Bestimmen der umgeordneten Daten als die ersten Daten in aufsteigender Reihenfolge von Leseadressen des vierten Speichermoduls.

11. Verfahren nach Anspruch 7, wobei die ersten Daten Abtastdaten unter JESD204C sind und die Übertragungsdaten der Verbindungsschicht Übertragungsdaten der Verbindungsschicht unter JESD204C sind.

12. Computerlesbares Speichermedium mit einem darin gespeicherten Computerprogramm, wobei das Computerprogramm, wenn es durch einen Prozessor ausgeführt wird, Operationen in dem Verfahren nach einem der Ansprüche 1 bis 6 oder Operationen in dem Verfahren nach einem der Ansprüche 7 bis 11 implementiert.

13. Elektronische Vorrichtung, umfassend einen Speicher, einen Prozessor und ein Computerprogramm, das auf dem Speicher gespeichert und auf dem Prozessor ausführbar ist, wobei der Prozessor beim Ausführen des Computerprogramms Operationen in dem Verfahren nach einem der Ansprüche 1 bis 6 oder Operationen in dem Verfahren nach einem der Ansprüche 7 bis 11 implementiert.

## Revendications

1. Procédé de conversion de données, comprenant :
acquérir (S202) des données d'échantillonnage obtenues par échantillonner dans un processus de communication de réseau ;
réordonner (S204) les données d'échantillonnage ; et
réaliser (S206) une opération d'horloge croisée et une opération de conversion de largeur binaire sur les données d'échantillonnage réordonnées pour obtenir des données de transmission de couche de liaison après conversion,
dans lequel réaliser (S206) l'opération d'horloge croisée sur les données d'échantillonnage réordonnées comprend : écrire les données d'échantillonnage dans un second module de mémoire selon une première horloge ; et lire les données d'échantillonnage à partir du second module de mémoire selon une seconde horloge, dans lequel la première horloge est différente de la seconde horloge, et
dans lequel réaliser (S206) l'opération de conversion de largeur binaire sur les données d'échantillonnage réordonnées comprend : acquérir un paramètre d'activation de lecture rd_en et une quantité de décalage shift_num d'un registre à décalage, et stocker les données d'échantillonnage réordonnées du second module de mémoire dans le registre à décalage et réaliser une opération de décalage correspondante, selon rd_en et shift_num,
**caractérisé en ce qu'**il comprend en outre
réaliser les opérations suivantes par un module de conversion de largeur binaire : acquérir le paramètre d'activation de lecture rd_en et la quantité de décalage shift_num du registre à décalage qui sont stockés dans un second module d'informations de configuration, et définir un paramètre cnt, dans lequel cnt représente des données laissées dans le registre à décalage dans une horloge suivant du registre à décalage ;
dans un cas où cnt est supérieur ou égal à w, déterminer que le paramètre d'activation de lecture rd_en est invalide et cnt = cnt - w,
dans un cas où cnt est inférieur à w, déterminer que rd_en est valide et cnt = cnt - w + n * N'* x ; dans lequel n désigne un nombre de canaux des données d'échantillonnage réordonnées, N' désigne une largeur binaire de transmission des données d'échantillonnage réordonnées, w désigne une largeur binaire de données envoyé sur chaque voie, et x désigne un facteur de multiplication par répartition de fréquence pour réaliser une division de fréquence et une combinaison sur les données d'échantillonnage réordonnées ; et
dans un cas où rd_en est invalide, les données d'échantillonnage réordonnées du second module de mémoire ne peuvent pas être stockées dans le registre à décalage, transmettre directement des données dans les w bits bas du registre à décalage et déterminer simultanément que la quantité de décalage shift_num du registre à décalage satisfait shift_num = w, et dans un cas où rd_en est valide, les données d'échantillonnage réordonnées du second module de mémoire sont lues et stockées dans le registre à décalage, transmettre directement les données dans les w bits bas du registre à décalage et déterminer simultanément que la quantité de décalage shift_num du registre à décalage satisfait shift_num = w - cnt.

2. Procédé selon la revendication 1, dans lequel réordonner (S204) les données d'échantillonnage comprend :
sélectionner des données de sortie à partir de multiples canaux de données d'échantillonnage, écrire les données de sortie dans un premier module de mémoire, et lire les données de sortie à partir du premier module de mémoire selon un ordre pour obtenir les données d'échantillonnage réordonnées.

3. Procédé selon la revendication 2, dans lequel sélectionner les données de sortie à partir des multiples canaux de données d'échantillonnage, écrire les données de sortie dans le premier module de mémoire, et lire les données de sortie à partir du premier module de mémoire selon l'ordre pour obtenir les données d'échantillonnage réordonnées comprend :
sélectionner, par un module de sélection de données multicanaux, les données de sortie à partir des multiples canaux de données d'échantillonnage selon des informations de configuration de sélection dans un premier module d'informations de configuration, et écrire, par le module de sélection de données multicanaux, les données de sortie sélectionnées dans le premier module de mémoire selon des informations d'adresse d'écriture dans le premier module d'informations de configuration, dans lequel les données qui doivent apparaître en premier sur une voie sont écrites à une adresse basse du premier module de mémoire, et les données qui doivent apparaître par la suite sur la voie sont écrites à une adresse haute du premier module de mémoire ; et
acquérir les données d'échantillonnage réordonnées dans un ordre croissant d'adresses de lecture du premier module de mémoire.

4. Procédé selon l'une quelconque des revendications 1 à 3, dans lequel
avant de réaliser (S206) l'opération d'horloge croisée et l'opération de conversion de largeur binaire sur les données d'échantillonnage réordonnées, le procédé comprend en outre : réaliser une division de fréquence de données et une combinaison sur les données d'échantillonnage réordonnées ; et
réaliser l'opération d'horloge croisée sur les données d'échantillonnage réordonnées comprend : réaliser l'opération d'horloge croisée sur les données d'échantillonnage soumises à la division de fréquence de données et à la combinaison.

5. Procédé selon la revendication 4, dans lequel réaliser la division de fréquence de données et la combinaison sur les données d'échantillonnage réordonnées comprend :
dans les données d'échantillonnage réordonnées, dans un cas où n*N' est inférieur à w, réaliser une division de fréquence par x sur les données ayant une largeur binaire de n*N', et assembler les données impliquées dans x horloges du registre à décalage avant et après une opération en cours du registre à décalage ensemble pour obtenir des données ayant une largeur binaire de n*N'* x , où n désigne un nombre de canaux des données d'échantillonnage réordonnées, N' désigne une largeur binaire de transmission des données d'échantillonnage réordonnées, w désigne une largeur binaire des données envoyé sur chaque voie, x désigne un facteur de multiplication par répartition de fréquence, n * N'* x est supérieur à w, et n*N'* (x - 1) est inférieur à w ; et
dans les données d'échantillonnage réordonnées, dans un cas où n * N' est supérieur à w, envoyer directement les données d'échantillonnage réordonnées de manière à les laisser passer.

6. Procédé selon la revendication 1, dans lequel les données d'échantillonnage sont des données d'échantillonnage selon la norme JESD204C, et les données de transmission de couche de liaison sont des données de transmission de couche de liaison selon la norme JESD204C.

7. Procédé de conversion de données, comprenant :
acquérir (S302) des données de transmission de couche de liaison à convertir dans un processus de communication de réseau ;
réaliser (S304) une opération de conversion de largeur binaire et une opération d'horloge croisée sur les données de transmission de couche de liaison pour obtenir les données de transmission de couche de liaison traitées ;
réordonner les données de transmission de couche de liaison traitées ; et
déterminer (S306) des données obtenues en réordonnant les données de transmission de couche de liaison traitées en tant que premières données,
dans lequel réaliser (S304) l'opération de conversion de largeur binaire sur les données de transmission de couche de liaison comprend : acquérir un paramètre d'activation d'écriture wr_en et une quantité de décalage shift_num d'un registre à décalage, utiliser shift_num pour contrôler le registre à décalage pour fonctionner, et écrire des données de sortie du registre à décalage dans un troisième module de mémoire,
**caractérisé en ce que**, acquérir le paramètre d'activation d'écriture wr_en et la quantité de décalage shift_num du registre à décalage comprend en outre :
réaliser les opérations suivantes par un module de conversion de largeur binaire : acquérir le paramètre d'activation d'écriture wr_en et la quantité de décalage shift_num du registre à décalage à partir d'un troisième module d'informations de configuration, et définir un paramètre cnt, dans lequel cnt représente des données laissées dans le registre à décalage dans une horloge suivant du registre à décalage ;
dans un cas où cnt est supérieur ou égal à n * N'*x - w , déterminer que le paramètre d'activation d'écriture wr_en est valide et cnt = cnt + w - n * N'* x ,
dans un cas où cnt est inférieur à n*N'*x-w, déterminer que wr_en est invalide et cnt=cnt+w ; dans lequel n désigne un nombre maximum de canaux des premières données envoyé sur une voie, N' désigne une largeur binaire de transmission des premières données après réordonnancement, w désigne une largeur binaire de données envoyé sur chaque voie, et x désigne un facteur de multiplication par répartition de fréquence pour réaliser une division de fréquence et une combinaison sur les données de transmission de couche de liaison ; et
dans un cas où wr_en est invalide, empêcher les données dans les n * N'* x bits bas du registre à décalage d'être transmises et écrites dans le troisième module de mémoire et déterminer simultanément que la quantité de décalage shift_num du registre à décalage satisfait shift _num = w, et dans un cas où wr_en est valide, transmettre directement des données dans les n * N'* x bits bas du registre à décalage, écrire les données dans les n*N'* x bits bas du registre à décalage dans le troisième module de mémoire, et déterminer simultanément que la quantité de décalage shift_num du registre à décalage satisfait shift _num = w - cnt .

8. Procédé selon la revendication 7, dans lequel réaliser (S304) l'opération d'horloge croisée sur les données de transmission de couche de liaison comprend :
écrire les données de transmission de couche de liaison dans le troisième module de mémoire selon une seconde horloge ; et
lire les données de transmission de couche de liaison à partir du troisième module de mémoire selon une première horloge, dans lequel la première horloge est différente de la seconde horloge,
ou, dans lequel
après avoir réalisé (S304) l'opération de conversion de largeur binaire et l'opération d'horloge croisée sur les données de transmission de couche de liaison, le procédé comprend en outre : réaliser une opération de division de fréquence et de combinaison sur les données de transmission de couche de liaison traitées ; et
déterminer les données obtenues en réordonnant les données de transmission de couche de liaison traitées en tant que premières données comprend : déterminer les données obtenues en réordonnant les données de transmission de couche de liaison soumises à l'opération de division de fréquence et de combinaison en tant que premières données,
ou dans lequel déterminer (S306) les données obtenues en réordonnant les données de transmission de couche de liaison traitées en tant que premières données comprend :
sélectionner des données de sortie à partir des données de transmission de couche de liaison traitées, écrire les données de sortie dans un quatrième module de mémoire, et lire les données de sortie à partir du quatrième module de mémoire selon un ordre pour obtenir les premières données après réordonnancement.

9. Procédé selon la revendication 8, dans lequel réaliser l'opération de division de fréquence et de combinaison sur les données de transmission de couche de liaison traitées comprend :
dans les données de transmission de couche de liaison traitées, dans un cas où n*N' est inférieur à w, réaliser une multiplication de fréquence par x sur des données ayant une largeur binaire de n * N'*x pour obtenir des données de sortie ayant une largeur binaire de n * N', dans lequel les données ayant la largeur binaire de n * N'*x avant la multiplication de fréquence et la division sont discontinues, et les données ayant la largeur binaire de n *N' après la division sont continues ; et
dans un cas où n * N' est supérieur ou égal à w, envoyer directement les données de transmission de couche de liaison traitées de manière à les laisser passer, où n désigne un nombre maximum de canaux des premières données envoyé sur une voie, N' désigne une largeur binaire de transmission des premières données après réordonnancement, et x désigne un facteur de multiplication par répartition de fréquence pour réaliser la division de fréquence et la combinaison sur les données de transmission de couche de liaison.

10. Procédé selon la revendication 8, dans lequel déterminer (S306) les données obtenues en réordonnant les données de transmission de couche de liaison traitées en tant que premières données comprend :
sélectionner, par un module de sélection de données multicanaux, les données de sortie à partir des données de transmission de couche de liaison traitées selon des informations de configuration de sélection dans un quatrième module d'informations de configuration, et écrire, par le module de sélection de données multicanaux, les données de sortie sélectionnées dans le quatrième module de mémoire selon des informations d'adresse d'écriture dans le quatrième module d'informations de configuration, dans lequel les données qui doivent apparaître en premier sont écrites à une adresse basse du quatrième module de mémoire, et les données qui doivent apparaître par la suite sont écrites à une adresse haute du quatrième module de mémoire ; et
déterminer les données réordonnées en tant que premières données dans un ordre croissant d'adresses de lecture du quatrième module de mémoire.

11. Procédé selon la revendication 7, dans lequel les premières données sont des données d'échantillonnage selon la norme JESD204C, et les données de transmission de couche de liaison sont des données de transmission de couche de liaison selon la norme JESD204C.

12. Moyen de stockage lisible par ordinateur ayant un programme informatique stocké dans celui-ci, dans lequel, lorsqu'il est exécuté par un processeur, le programme informatique met en œuvre des opérations dans le procédé selon l'une quelconque des revendications 1 à 6 ou des opérations dans le procédé selon l'une quelconque des revendications 7 à 11.

13. Appareil électronique, comprenant une mémoire, un processeur et un programme informatique qui est stocké sur la mémoire et exécutable sur le processeur, dans lequel, lors de l'exécution du programme informatique, le processeur met en œuvre des opérations dans le procédé selon l'une quelconque des revendications 1 à 6 ou des opérations dans le procédé selon l'une quelconque des revendications 7 à 11.
